# EUROPÄISCHE PATENTSCHRIFT

(11) **EP 0 825 075 B1**
(45) Veröffentlichungstag und Bekanntmachung des Hinweises auf die Patenterteilung: **07.11.2001**
(21) Anmeldenummer: 97113540.5
(22) Anmeldetag: 06.08.1997
(51) Int. Cl.: B60S 1/04, B60S 1/38, B60S 1/32

(54) **Scheibenwischer für die Windschutzscheibenfläche eines Kraftfahrzeugs**
Wiper for a vehicle windscreen
Essuie-glace pour pare-brise de véhicule

(30) Priorität: 16.08.1996 DE 19633139
(43) Veröffentlichungstag der Anmeldung: 25.02.1998
(73) Patentinhaber: ADAM OPEL AG, 65423 Rüsselsheim (DE)
(72) Erfinder: Reinhardt, Karl, Dipl.-Ing., 55234 Framersheim (DE); Schäfer, Reinhard, 55262 Heidesheim (DE); Melchior, Holger, Dipl.-Ing., 65428 Rüsselsheim (DE); Schlote, Eckart, Dipl.-Ing., 65189 Wiesbaden (DE)

(56) Entgegenhaltungen:
- DE-A- 4 405 926
- DE-A- 19 650 924
- FR-A- 2 556 297
- GB-A- 2 195 076

## Beschreibung

Die Erfindung bezieht sich auf einen Scheibenwischer der im Oberbegriff des Patentanspruchs 1 angegebenen Art.

Solche Scheibenwischer kommen bei Personenkraftwagen meist neben einem weiteren Scheibenwischer zum Einsatz, der sich jedoch zwischen einem unteren Scheibenrahmen und etwa der Windschutzscheibenmitte hin- und herbewegt.

Ein Scheibenwischer der hier in Rede stehenden Art ist beispielsweise aus dem DE-GM 87 16 154 bekannt. Ein Luftleitelement ist dort vorzugsweise an einem Wischerarm zu befestigen. Es dient einerseits dazu, ein sicheres Anliegen des Wischerblattes auch bei hohen Fahrgeschwindigkeiten zu gewährleisten. Ein zur Windschutzscheibenfläche hin weisender Flächenabschnitt des Leitelementes soll aber auch die Luftströmung vor der Scheibenfläche beeinflussen. Einerseits sollen Düsen für Waschflüssigkeit vor direkter Fahrtwindbeeinflussung geschützt werden und andererseits soll eine gleichmäßige Scheibenbenetzung durch Strömungsbeeinflussung erreicht werden. Dazu ist das Leitelement in Fahrtrichtung vor dem Wischerblatt angeordnet. Hinter dem Leitelement, also im Bereich des Wischerblattes besteht eine Zone gewissen Unterdruckes, was nach dem DE-GM 87 16 154 beabsichtigt ist.

DE-A-44 05 926 beschreibt einen Scheibenwischer mit einem in einem Hohlkanal angeordneten Wischerblatt, der eine Ruheposition in einer Ausnehmung der A-Säule eines Fahrzeugs hat.

Bei den genannten Scheibenwischern und auch allgemein bekannten Scheibenwischern ohne Mittel zur Beeinflussung der Luftströmung vor der Windschutzscheibenfläche besteht das Problem, daß Wasser nach einer Aufwärtsbewegung des Scheibenwischers mit "zurückgeschleppt" wird, da der Wasserabfluß hinter dem Wischer verzögert erfolgt. Eine Unterdruckzone hinter dem Wischerblatt verstärkt dieses Problem, da Wasser bestrebt ist, dorthin zu fließen anstatt abzufließen.

Der Erfindung liegt die Aufgabe zugrunde, dieses Problem zu beseitigen, also einen Scheibenwischer der genannten Art zu schaffen, der nach einer Aufwärtsbewegung kein oder nur wenig Wasser auf die gewischte Scheibenfläche "zurückschleppt".

Zur Lösung dieser Aufgabe zeichnet sich der Scheibenwischer gemäß der Erfindung durch die im Patentanspruch 1 angegebenen Merkmale aus. Weitere Einzelheiten ergeben sich aus den Patentansprüchen 2 bis 4.

Das Problem des "Zurückschleppens" von Wasser durch das Wischerblatt wird beseitigt, wenn in Fahrtrichtung hinter dem Wischerblatt (also bei einer Bewegung des Scheibenwischers von unten nach oben - vor dem Wischerblatt) eine Zone erhöhten Druckes geschaffen wird, so daß das Wasser durch den Luftdruck schnell vom Wischerblatt weggefördert wird. Dies ist erreichbar, wenn ein etwa senkrecht zur Windschutzscheibenfläche ausgerichtetes Leitelement, welches bis nahe an die Scheibenfläche heranreicht, vorgesehen wird, wobei es so anzuordnen ist, daß es in der Position, in der der Scheibenwischer sich nahe eines seitlichen Scheibenrahmens befindet, einen das Wischerblatt ausgrenzenden Luftkanal mit dem seitlichen Scheibenrahmen bildet.

Der so gestaltete Scheibenwischer ist vorzugsweise für den Einsatz auf der Fahrerseite des Kraftfahrzeugs zu gestalten. Das Leitelement kann wahlweise am Wischerarm oder am Wischerblatt befestigt sein, wobei es nicht über die volle Länge des Wischerblattes reichen muß.

Details der Erfindung werden im folgenden anhand eines Ausführungsbeispiels beschrieben. Von den zugehörigen Zeichnungen zeigt
- Fig. 1:: einen erfindungsgemäßen Scheibenwischer in einer nach oben verschwenkten Betriebsposition in perspektivischer Darstellungsweise,
- Fig. 2:: Schnitt II-II aus Figur 1 in schematischer Darstellungsweise.

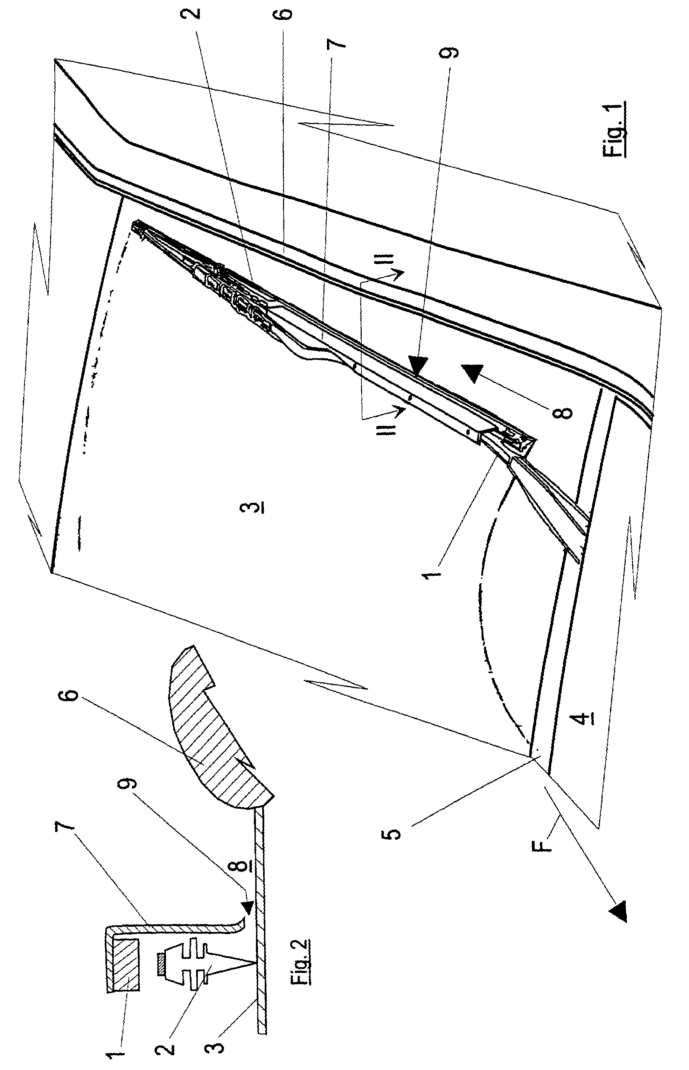

Der Scheibenwischer besteht wie üblich aus einem Wischerarm 1 und einem Wischerblatt 2. Er ist auf einer Windschutzscheibenfläche 3 zwischen zwei Positionen um eine nicht gezeigte Achse verschwenkbar. In der ersten (Ruhe-) Position liegt der Scheibenwischer bereichsweise hinter einer Haube 4 nahe eines unteren Scheibenrahmens 5. In der zweiten Position, die in der Figur 1 gezeigt ist, befindet sich der Scheibenwischer nahe eines seitlichen Scheibenrahmens 6 der Fahrerseite des Kraftfahrzeugs. Das Wischerblatt 2 hat eine zum Scheibenrahmen 6 etwa parallele Lage.

An dem Wischerarm 1 ist ein Leitelement 7 befestigt, welches von dort aus in Richtung der Windschutzscheibenfläche 3 bis nahe an diese heranragt. Es ist in Fahrtrichtung F hinter bzw. bei einer Aufwärtsbewegung des Scheibenwischers vor diesem angeordnet, etwa senkrecht zur Windschutzscheibenfläche 3 ausgerichtet und beeinflußt damit insbesondere die dicht vor der Scheibenfläche 3 befindliche Luftströmung. In der gezeigten Position des Scheibenwischers bildet das Leitelement 7 gemeinsam mit dem seitlichen Scheibenrahmen 6 einen Luftkanal 8, aus dem das Wischerblatt 2 ausgegrenzt ist. Eine Luftströmung in dem Luftkanal 8 kann nicht über das Wischerblatt 2 abfließen, sondern verdrängt hinter dem Wischerblatt 2 befindliches Wasser nach oben. Es besteht dort nicht mehr - wie im Stand der Technik - eine Unterdruckzone, sondern eine Zone erhöhten Luftdruckes, so daß vom Scheibenwischer in Richtung des seitlichen Scheibenrahmens 6 gefördertes Wasser schnell abfließt und nicht mit "zurückgeschleppt" wird.

Der schnelle Abfluß des Wassers wird aber nicht nur in der oberen Endposition des Wischers durch die Wirkung des Luftkanals 8 gefördert, sondern das Leitelement 7 hat auch bereits positiven Einfluß während der Aufwärtsbewegung des Wischers. Normalerweise wird bei der Aufwärtsbewegung des Scheibenwischers der Fahrtwind vom Wischerblatt 2 von der Scheibenfläche 3 abgelenkt, und hinter dem Wischerblatt besteht eine Unterdruckzone, aus der Wasser nur schlecht abfließt. Das Leitelement 7 begrenzt nun einen schmalen Spalt 9 zwischen sich und der Windschutzscheibenfläche 3. Bei der Aufwärtsbewegung des Scheibenwischers wird Luft über das Wischerblatt 2 streichen, dann aber vom Leitelement 7 wieder zur Scheibenfläche 3 gelenkt, bis sie den Spalt 9 passiert. Somit besteht also auch bereits bei der Aufwärtsbewegung des Wischers eine Zone erhöhten Druckes, so daß Wasser sofort aus dieser Zone verdrängt wird.

## Patentansprüche

1. Scheibenwischer für die Windschutzscheibenfläche (3) eines Kraftfahrzeugs, der aus einem Wischerarm (1) und einem Wischerblatt (2) sowie aus Mitteln zur Beeinflussung der Luftströmung vor der Windschutzscheibenfläche (3) besteht, wobei der Scheibenwischer um eine Achse zwischen zwei Positionen verschwenkbar ist, wovon eine erste Ruheposition nahe eines unteren Scheibenrahmens (5) und eine zweite Position nahe eines seitlichen Scheibenrahmens (6) gelegen ist, wobei ein Mittel zur Beeinflussung der Luftströmung aus einem etwa senkrecht zur Windschutzscheibenfläche (3) ausgerichteten Leitelement (7) besteht, **dadurch gekennzeichnet, daß** das Leitelement (7) bis nahe an die Windschutzscheibenfläche (3) heranreicht und derart angeordnet ist, daß es in der zweiten Position des Scheibenwischers einen das Wischerblatt (2) ausgrenzenden Luftkanal (8) mit dem seitlichen Scheibenrahmen (6) derart bildet, dass Luft nicht über das Wischerblatt (2) abfließen kann, sondern mit hinter dem Wischerblatt (2) befindlichen Wasser in dem Luftkanal (8) nach oben verdrängt wird.

2. Scheibenwischer nach Anspruch 1, **dadurch gekennzeichnet, daß** er für die Fahrerseite des Kraftfahrzeugs zum Einsatz kommt.

3. Scheibenwischer nach Anspruch 1 und 2, **dadurch gekennzeichnet, daß** das Leitelement (7) am Wischerarm (1) befestigt ist und von diesem aus in Richtung der Windschutzscheibenfläche (3) weist.

4. Scheibenwischer nach Anspruch 1 und 2, **dadurch gekennzeichnet, daß** das Leitelement (7) am Wischerblatt (2) befestigt ist.

## Claims

1. Windscreen wiper for the windscreen surface (3) of a motor vehicle, which consists of a wiper arm (1) and a wiper blade (2) as well as means for controlling the air flow in front of the windscreen surface (3), wherein the windscreen wiper is pivotable about an axis between two positions of which a first rest position is located close to a lower windscreen frame (5) and a second position is located close to a lateral windscreen frame (6), wherein a means for controlling the air flow consists of a guide element (7) oriented approximately perpendicularly to the windscreen surface (3), **characterised in that** the guide element (7) reaches close to the windscreen surface (3) and is arranged in such a way that in the second position of the windscreen wiper it forms with the lateral windscreen frame (6) an air channel (8) excluding the wiper blade (2) such that air cannot flow away over the wiper blade (2) but is forced upwards in the air channel (8) with water located behind the wiper blade (2).

2. Windscreen wiper according to claim 1, **characterised in that** it is used for the driver's side of the motor vehicle.

3. Windscreen wiper according to claims 1 and 2, **characterised in that** the guide element (7) is attached to the wiper arm (1) and from the latter points in the direction of the windscreen surface (3).

4. Windscreen wiper according to claims 1 and 2, **characterised in that** the guide element (7) is attached to the wiper blade (2).

## Revendications

1. Essuie-glace pour la surface d'un pare-brise (3) d'un véhicule automobile, comprenant un bras d'essuie-glace (1) et un balai d'essuie-glace (2) ainsi que des moyens pour agir sur l'écoulement de l'air devant la surface de pare-brise (3), l'essuie-glace pouvant pivoter autour d'un axe entre deux positions, parmi lesquelles une première position d'arrêt est située dans le voisinage d'un cadre (5) inférieur de pare-brise et une seconde position est située dans le voisinage d'un cadre (6) latéral de pare-brise, le moyen pour agir sur l'écoulement de l'air étant formé d'un élément déflecteur (7) orienté perpendiculairement à la surface de pare-brise (3), **caractérisé en ce que** l'élément déflecteur (7) s'étend jusque dans le voisinage de la surface de pare-brise (3) et est disposé de manière telle que, dans la seconde position de l'essuie-glace,il forme avec le cadre latéral (6) de pare-brise un canal à air (8) adjacent au balai d'essuie-glace, tel que l'air ne puisse pas s'écouler par dessus le balai d'essuie-glace (2), mais soit refoulé vers le haut avec l'eau présente derrière le balai d'essuie-glace (2), dans le canal à air (8).

2. Essuie-glace selon la revendication 1, **caractérisé en ce qu'**il est utilisé pour le côté conducteur du véhicule.

3. Essuie-glace selon les revendications 1 et 2, **caractérisé en ce que** l'élément déflecteur (7) est fixé au bras d'essuie-glace (1) et à partir de celui-ci est dirigé vers la surface du pare-brise (3).

4. Essuie-glace selon les revendications 1 et 2, **caractérisé en ce que** l'élément déflecteur (7) est fixé au balai d'essuie-glace (2) .
